# EUROPÄISCHE PATENTSCHRIFT

(11) **EP 2 516 883 B1**
(45) Veröffentlichungstag und Bekanntmachung des Hinweises auf die Patenterteilung: **01.02.2017**
(21) Anmeldenummer: 10798962.6
(22) Anmeldetag: 15.12.2010
(51) Int. Cl.: F16F 1/38, F16F 1/387

(54) **EXZENTRISCHE SPANNBUCHSE**
ECCENTRIC CLAMPING BUSHING
DOUILLE DE SERRAGE EXCENTRIQUE

(30) Priorität: 21.12.2009 EP 09015795
(43) Veröffentlichungstag der Anmeldung: 31.10.2012
(73) Patentinhaber: FM Energie GmbH & Co. KG, 64646 Heppenheim (DE)
(72) Erfinder: Mitsch, Franz, 64646 Heppenheim (DE)
(74) Vertreter: Benz, Jürgen
(86) Internationale Anmeldenummer: PCT/EP2010/007643
(87) Internationale Veröffentlichungsnummer: WO 2011/085773

(56) Entgegenhaltungen:
- EP-A1- 1 674 757
- EP-A2- 0 149 079
- DE-A1- 2 811 034
- DE-A1-102005 012 751
- DE-B- 1 033 047
- DE-U1- 29 924 608
- GB-A- 818 850
- US-A- 3 787 102

## Beschreibung

Die Erfindung beschreibt eine Spannbuchse, die aufgrund ihrer besonderen exzentrischen Geometrie und verwendeten Verbundmaterialen aus einzelnen Segmenten aus Elastomeren und Blechen besteht und zur Reduzierung von Schwingungen und Körperschall, welche in Maschinen / Getrieben, auftreten, geeignet ist. Die exzentrische, bzw. rotationsunsymmetrische Geometrie der Spannbuche im entspannten als auch vorgespannten Zustand bewirkt, dass insbesondere vertikale Schwingungen gedämpft werden. Durch entsprechende Maßnahmen kann auch gleichzeitig eine hohe Steifigkeit in horizontaler Ebene quer zur Spannbuchsenachse erreicht werden. Die erfindungsgemäßen Spannbuchsen werden in vorzugsweise in Drehmomentstützen von Getrieben und hierbei wieder insbesondere in Windkraftanlagen eingebaut.

Windkraftanlagen besitzen, wie in der Regel jedes angetriebene System, Lager zwischen den angetriebenen Bauteilen (Motor/Getriebe) und den statischen Bauteilen (z.B. Gehäuse). An die Lager von Windkraftanlagen sind dabei besondere Anforderungen zu stellen. Die Lager müssen nämlich im besonderen Maße hohen und unterschiedlich gerichteten Kräften standhalten. Durch die Unregelmäßigkeiten des Windes hinsichtlich seiner Stärke und Richtung, die sich innerhalb kurzer Zeit ändern können, treten permanent Kräfte unterschiedlicher Stärke in Zug-, Druck- und Querrichtung auf, die um so größer sind, je stärker die Windkraft und je größer die Windkraftanlage ist. Bei Stürmen oder Orkanen müssen Windkraftanlagen sogar extremen Belastungen standhalten. Die Bauteile müssen dabei die Beanspruchungen über eine lange Betriebszeit unbeschädigt aushalten. Die Lager von Windkraftanlagen haben überdies die Aufgabe, die durch die einwirkenden Kräfte bedingten und durch Schwingungen der Anlage erzeugte Geräusche abzuschwächen.

Die Antriebswelle von Windkraftanlagen ist hohen Kräften und Drehmomenten ausgesetzt, welche von den Rotorblättern auf sie übertragen werden. Damit die Antriebswelle, sowie die mit ihr verbundenen Teile keine übermäßige Materialermüdung erleiden und zerstört werden, muss sie entsprechend gelagert sein. Die Lager müssen dabei die besagten Kräfte und Momente aufnehmen und nach Möglichkeit neutralisieren bzw. ausgleichen. Die Lager müssen Kräfte in radialer z-y-Richtung übertragen und in axialer x-Richtung möglichst weich sein, um das am Stehlager vorhandene Lagerspiel ohne große Rückstellkräfte ausgleichen zu können. Häufig werden Dreipunktlagerungen verwendet.

Bei einer typischen modernen Dreipunktlagerung des Standes der Technik läuft die den Rotor tragende Welle durch ein Stehlager und mündet im Getriebe. Der Getriebeblock ist mittels der Getriebe-Drehmomentstützen beidseitig des Getriebeblocks mit dem Maschinenträger verbunden. In der Regel ist eine Drehmomentstütze auf jeder Seite vorhanden. Die Drehmomentstützen weisen an ihren Enden Bohrungen auf. In diesen Bohrungen bzw. Augen befinden sich die eigentlichen Spannbuchsen, durch diese eine Achse geführt ist, welche selbst an zwei Ständern vor und hinter der Drehmomentstütze befestigt ist. Die Achse kann beispielsweise durch radiale Schrauben direkt am Ständer angeschraubt werden. Während die Spannbuchse im Auge der Getriebe Drehmomentstütze ruht, lagert die Achse im zylindrischen Hohlraum der Buchse. Die Buchse selbst ist aus Materialien gefertigt, die auch elastische Eigenschaften aufweisen und so in der Lage sind , die genannten Kräfte und Momente auszugleichen und abzufedern.

Die Buchsen werden als nicht geteilte Vollbuchsen in die mit Bohrungen versehenen Ständer axial eingepresst oder auch in Form von geteilten Buchsen in horizontal geteilten Ständern radial verspannt.

Es gibt jedoch auch Ausführungen im Stand der Technik, bei denen zu beiden Seiten der Getriebestütze eine Buchsenlagerung ausgeführt ist. Die Spannbuchsen sind bei dieser Variante in den beiden Ständern beidseitig der Drehmomentstütze eingebracht. Diese werden nach dem Stand der Technik als nicht geteilte Vollbuchsen in die mit Bohrungen (Augen) versehenen Ständer axial eingepresst oder auch in Form von geteilten Buchsen in horizontal geteilten Ständern radial verspannt.

Aus der DE OS 1 955 308 sind Buchsen bekannt, welche aus konzentrischen mit Gummi beschichteten Halbschalen bestehen und für den Einsatz als Federelement oder Gelenkbuchse mit extrem großen Ausschlagwinkel in leichteren Fahrzeugen Verwendung finden können.

Aus der EP 1 046 832 bzw. aus der DE 299 24 608 U1 sind radial verspannbare im gespannten Zustand rotationssymmetrische zylindrische Spannbuchsen bestehend aus entsprechend geformten aufeinanderliegenden Halbschalen bekannt. Diese bestehen jeweils aus zylindrischen Außen- und Innenschalen mit entsprechenden durchgehenden Elastomer/Blech/Elastomerschichten, die gegeneinander radial versetzt sind; so dass sie, bzw. die aus ihnen gebildete Vollschale in ungespannten Zustand exzentrisch, aber nach Vorspannung konzentrisch bzw. rotationssymmetrisch sind/ist.

Diese Buchsen, welche insbesondere für den Einsatz in Windkraftanlagen entwickelt worden sind, um eine Dämpfung von auftretenden Schwingungen zu bewirken, haben aufgrund ihrer konzentrischen, in alle Richtungen gleichmäßigen Geometrie den Nachteil, dass sie relativ viel Platz in alle Richtungen benötigen. Bei Getriebelagerungen von Windkraftanlagen ist aber gerade das Platzangebot in der horizontalen Ebene sehr beschränkt. Da Körperschall bei den verwendeten Windkraftanlagen hauptsächlich durch vertikale gerichtete Schwingungen entstehen, müssen die dämpfenden Systeme entsprechend stark in dieser Richtung ausgelegt sein. Für besonders gute schalltechnische Eigenschaften ist es vorteilhaft, eine dickere Gummischicht in Richtung der Körperschallanregung zu haben. Bei der rotationssymmetrischen Buchse der EP 1 046 832, müsste die Buchse zur Verbesserung der schalltechnischen Eigenschaften im Durchmesser, d.h. sowohl in der Höhe als auch in der Breite größer werden. Damit müssten auch die Ständer oder Klemmhälften deutlich verbreitert werden, was zum einen zu Mehrkosten, höheren Gewichten aber auch zu Stabilitätsproblemen in der oberen Halbschale führt, so dass diese aufgrund des höheren Biegemomentes bei größerer Spannbreite deutlich dicker ausgeführt werden müsste. Dies wiederum bedeutet, dass der Platzbedarf in horizontaler Richtung oft nicht ausreicht, ohne dass entsprechende Umbaumaßnahmen an der Anlage vorgenommen werden müssen.

Es bestand somit die Aufgabe, eine entsprechende Spannbuchse auf Basis der an sich wirksamen Spannbuchse der EP 1 046 832 zu entwickeln, welche zum einen eine verbesserte Dämpfung bzw. Körperschallentkopplung in vertikaler Richtung erreicht, zum anderen aber einen geringen bzw. reduzierten Platzbedarf in horizontaler Richtung benötigt.

Die Aufgabe wurde durch die Spannbuchse, wie sie in den Ansprüchen und im folgenden näher beschrieben wird, gelöst.

Die erfindungsgemäßen Spannbuchsen erfahren ferner auf Grund ihrer ungewöhnlichen Geometrie eine gleichmäßige Verformung nach erfolgter Verspannung, wodurch eine hohe Lebensdauer des eingesetzten Elastomers gewährleistet wird.

Im folgenden wird die erfindungsgemäße Spannbuchse sowie ihre Funktion im Detail beschrieben.

In einem ersten Aspekt der Erfindung weisen die erfindungsgemäßen exzentrischen Buchsen - unter der Voraussetzung, dass sie üblicherweise senkrecht eingebaut werden - in horizontaler oder seitlicher angeordnete Schicht-Segmenten (23) aus Elastomeren und Blechen auf, die in ihrer Gesamtwirkung eine geringere Dämpfung ausweisen als Schicht-Segmente (24), welche in vertikaler oder Längsrichtung angeordnet sind und die für die Schwingungsdämpfung speziell in dieser Richtung verantwortlich sind. Damit wird erreicht, dass die Buchse in ihrer horizontalen Ausdehnung eine gewünschte wesentlich geringere

Dämpfung erfährt als in der vertikalen Richtung. Dieser Effekt ist also gegeben, wenn die Gesamtmasse der Schichten aus Elastomeren in vertikaler Richtung größer ist als diejenige in horizontaler Richtung. Der Effekt kann aber auch erreicht werden, wenn in vertikaler Richtung anstatt mehr Elastomerschichten oder -masse entsprechende "weiche" Schichten ohne Elastomer (sogenannte Leerschichten) oder Schichten mit weicheren Elastomeren zur Verfügung gestellt werden. Die entsprechende auch im gespannten Zustand exzentrische Geometrie der erfindungsgemäßen Buchsen unterstützt diesen Effekt.

In einem zweiten Aspekt der Erfindung wird durch diese Konstruktion bzw. Bauweise erreicht, dass der benötigte Platz in horizontaler Ausrichtung deutlich geringer ist als in der vertikalen.

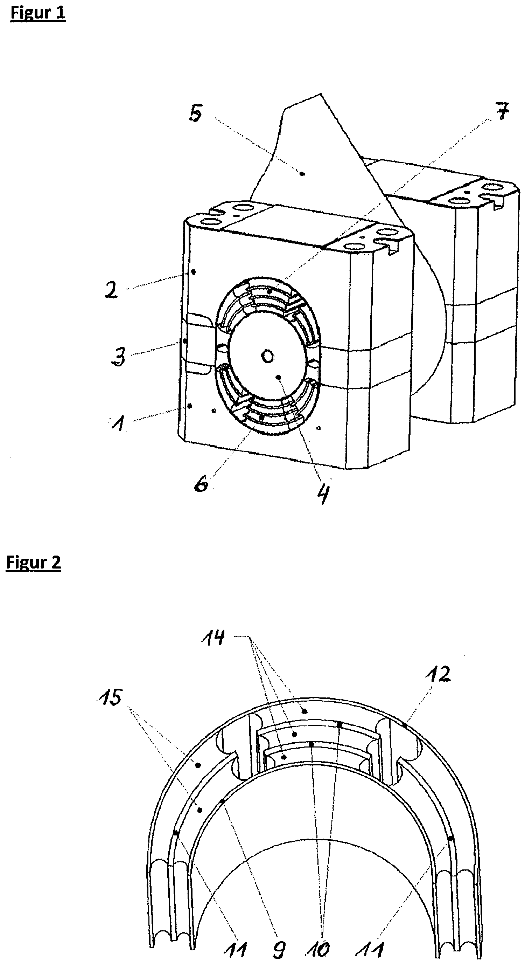

Die erfindungsgemäße Spannbuchse besteht aus zwei aufeinander liegenden durch ihre äußere Form bedingte exzentrischen Halbschalenelementen (6) (7), welche somit eine exzentrische, rotationsunsymmetrische Vollschale bilden (Figur 1). Die äußere Form eines Halbschalenelementes wird dabei von dem äußeren Blech (12) bestimmt. Letzteres ist in der entsprechenden rotationsunsymmetrischen Form gebogen. Die Vollschale hat somit eine im Längsschnitt (Schnitt durch die Vertikale) von der Kreisform abweichende Kontur; die zugehörigen Halbschalen (6) (7) besitzen demnach ebenfalls eine von einem Halbkreis abweichende Kontur. Die bevorzugte Längsschnittkontur der erfindungsgemäßen Spannbuchse ist bei der Vollschale ein Oval oder eine Ellipse, deren Längsachse im Betriebszustand vorzugsweise vertikal ausgerichtet ist. Die Halbschalen weisen die entsprechenden Halbformen auf.

Weiterhin kann die Geometrie des Längsschnittes der erfindungsgemäßen Spannbuchse sich zusammensetzen aus einem oberen und unteren Kreis- oder ovalen Bogenelement, welche durch ein mittiges Rechteck oder Quadrat miteinander verbunden sind. Dies bedeutet, dass die Außenkontur der Spannbuchse neben runden Elementen oben und unten auch gerade Flächen an den Seiten aufweisen kann.

Bei der beschriebenen Geometrie ist somit der Radius des exzentrisch gekrümmten Außenblechs (12) der Spannbuchse oder auch der betreffenden Halbschalenelemente in der horizontalen Ausdehnung kleiner als in der vertikalen Ausdehnung. In der Praxis und bei Einsatz derartiger erfindungsgemäßer Buchsen in Windkraftanlagen hat eine erfindungsgemäße typische Buchse beispielsweise einen Außendurchmesser in Längsrichtung (a) von etwa 350 - 380mm und einen Außendurchmesser in Querrichtung (b) von 280 - 300 mm, oder anders und unabhängig von der Größe ausgedrückt, variiert das Verhältnis Längsdurchmesser / Querdurchmesser ((a) / (b)) einer solchen exzentrischen Vollbuchse zwischen 1.20 und 1.50, vorzugsweise zwischen 1.3 und 1.4.

Die Schichtdicke (c) einer erfindungsgemäßen Buchse oder auch Halbbuchse in vertikaler Richtung beträgt an der dicksten (mittigen) Stelle etwa 70 - 90 mm, während die Schichtdicke in horizontaler Richtung (d) auf Höhe der Trennebene ihre schmalste Ausdehnung erfährt und dort etwa 30 - 50mm dick ist. Das Verhältnis (c) / (d) beträgt somit im Mittel etwa 2 : 1.

Gegenstand der Erfindung ist somit eine entsprechende exzentrische Buchse, bei der das Verhältnis der Schichtdicke der Halbbuchse in vertikaler Richtung (c) zu der Schichtdicke der Halbbuchse in horizontaler Richtung (d) 1.5 bis 2.5 (c/d), vorzugsweise 2 ist.

Gegenstand der Erfindung ist somit auch eine entsprechende exzentrische Buchse, bei der das Verhältnis Außendurchmesser der Vollbuchse in vertikaler Richtung (a) zum Außendurchmesser der Voll-/Halbbuchse in horizontaler Richtung (b) 1.2 bis 1.4 oder 1.5 beträgt.

Die bevorzugten Spannbuchsen gemäß der Erfindung besitzen so ein Schichtdickenverhältnis (a) / (b) von 1.5 bis 2.5, vorzugsweise etwa 2 und ein Verhältnis Außendurchmesser in vertikaler Richtung (c) zu Außendurchmesser in horizontaler Richtung (d) von etwa 1.2 bis 1.4.

Die Bleche sind erfindungsgemäß je nach Größe und erforderlicher Belastbarkeit zwischen 2 und 8 mm dick, wobei die mittleren bzw. Zwischen-Bleche vorzugsweise gleich oder dünner oder dicker, vorzugsweise aber dicker sind als die äußeren Bleche sind. Das Lagerauge, welches die Buchsenachse (4) aufzunehmen hat, besitzt erfindungsgemäß einen Durchmesser zwischen 100 und 280 mm, insbesondere zwischen 180 und 240 mm.

Jedes Halbschalenelement (6) (7) besitzt ein äußeres die exzentrische Form der Schale bestimmendes Blech (12) sowie ein inneres Blech (9), welches im Längsschnitt halbkreisförmig ist, so dass bei Zusammenfügen der Halbschalen ein durch die inneren Bleche (9) der Halbschalen geformter zylindrischer Hohlraum im Durchmesser der Spannbuchsenachse (4) zur Aufnahme der selbigen gebildet wird.

Das äußere entsprechend der besagten äußeren Kontur geformte Blech (12) einer Halbschale ist mit dem inneren zylindrischen Blech (9) über mindestens eine Elastomerschicht (14) (15) verbunden. Dabei umfasst eine solche Halbschale erfindungsgemäß drei Bereiche: zwei seitliche oder horizontal ausgerichtete Segmente (23), welche mindestens zwei Elastomerschichten und mindestens ein Zwischenblech aufweisen, und ein mittleres vertikal ausgerichtetes Segment (24)(28), welches frei oder mehr Elastomerschichten und / oder Leerschichten aufweist. Dabei kann die Anzahl der Elastomerschichten (14) einer Halbschale in der Mitte (vertikal) erfindungsgemäß größer als die Anzahl oder aber auch gleich der Anzahl der Elastomerschichten (15) seitlich an den beiden Rändern einer Halbschale (dasselbe gilt auch für ggf. eingesetzte Zwischenbleche) sein. Üblicherweise besitzen die Schalen in vertikaler Richtung bzw. mittig drei, vier oder mehr Elastomerschichten (14), welche jeweils durch ein Zwischenblech (10) voneinander getrennt sind. Dementsprechend besitzen die Halbschalen an ihren Rändern (horizontal) gleichviel oder weniger Elastomerschichten (15), die durch Zwischenbleche (11) voneinander getrennt sind. Die beiden Bleche (12) und (9) welche den Halbbuchsenkörper bilden, sind seitlich an ihren Rändern, welche die Trennebene der beiden aufeinanderliegenden Halbschalen bilden, durch mindestens eine Elastomerschicht (13), vorzugsweise aber durch mindestens zwei elastomere Schichten (15), welche durch Zwischenbleche getrennt sind, miteinander verbunden.

In einer einfachen besonderen Ausführungsform der Erfindung weisen die Schichten in vertikaler Richtung mindestens eine Leerschicht auf, also eine Schicht die keine Füllung mit Elastomermaterial aufweist. Vorzugsweise sind in dieser Ausführungsform die vertikalen Schichten alle Leerschichten.

Die Schicht-Segmente (24) (28) können prinzipiell alle Elastomerschichten, alle Leerschichten oder vorzugsweise abwechselnd Elastomer- / und Leerschichten sein. Die Elastomerschichten können dabei auch von gleiche oder von geringerer Shore-Härte sein als die Elsatomerschichten der seitlichen/horizontalen Schicht-Segmente (23).

Die Form der elastomeren Schichten und der Zwischenbleche richtet sich nach der Form bzw. Kontur des äußeren (12) und inneren (9) Begrenzungsblechs, wobei für eine bestimmte Halbschale mit vorgegebener Form, die Zwischenschichten/-bleche vorzugsweise an die Form/Kontur des ihnen am nächsten liegenden Begrenzungsblechs angelehnt sind.

Gegenstand der Erfindung ist somit eine exzentrische Spannbuchse (8) umfassend ein oberes (7) und ein unteres (6) Halbschalenelement, die aufeinander liegend eine Vollschale bilden, welche im Längsschnitt eine ovale, ellipsenähnliche oder bogenförmig-rechteckige Kontur aufweist, deren lange Achse senkrecht zur Fläche der beiden aufeinanderliegenden Halbschalenelemente (6) (7) ausgerichtet ist, wobei jedes dieser Schalenelement zusammengesetzt ist aus einem äußeren besagte Längsschnittkontur aufweisenden Halbschalenblech (12) und einem inneren Halbschalenblech (9), wobei letzteres im Längsschnitt eine halbkreisförmige Kontur besitzt und bei Aufeinanderliegen zusammen mit dem inneren identischen Halbschalenblech des anderen Halbschalenelementes einen zylindrischen Hohlraum bildet, der die Spannbuchsenachse (4) aufnimmt und diese nach Zusammenfügung der Halbschalenelemente zur kompletten Spannbuchse (8) und deren Verspannung fest umschließt, so dass das äußere (12) und innere (9) Halbschalenblech eines jeden Halbschalenelementes (6) (7) durch zwei seitliche Schicht-Segmente (23) und ein mittleres Schicht-Segment (24) miteinander fest verbunden sind, welche analog dem Halbschalenelement geformt sind, wobei
(i) die seitlichen Segmente (23) abwechselnd Elastomerschichten und Zwischenbleche mit mindestens zwei Elastomerschichten (15) und einem Zwischenblech (11) umfassen,
(ii) das mittlere Segment (24) abwechselnd Elastomerschichten oder Leerschichten und Zwischenbleche (10) (27) mit mindestens drei Elastomerschichten (14) oder Leerschichten (28) und zwei Zwischenblechen (10) (27) umfassen,
(iii) das Verhältnis von Außendurchmesser der aus zwei übereinander angeordneten Halbschalen zusammengesetzten Vollbuchse in vertikaler Richtung (a) zum Außendurchmesser der Halb- oder Vollbuchse in horizontaler Richtung (b) 1.2 bis 1.5 beträgt, so dass der Radius des äußeren Halbschalenblechs (12) und somit der Spannbuchse (8) in der horizontalen Ausdehnung kleiner ist als in der vertikalen Ausdehnung, und
(iv) das Verhältnis der Schichtdicke in der Mitte der Halbbuchse in vertikaler Richtung (c) zu der Schichtdicke an der Stirnfläche der Halbbuchse in horizontaler Richtung (d) 1.5 bis 2.5 beträgt, so dass jede Halbschale als auch die Vollschale sowohl im entspannten als auch im vorgespannten Zustand exzentrisch in Bezug zur Buchsenachse (4) ist.

Gegenstand der Erfindung ist insbesondere eine exzentrische Spannbuchse (8), wobei jede Halbschale zwei Schicht-Segmente (23) umfasst mit drei vertikal oder mittig, bzw. in Längsrichtung ausgerichteten Elastomerschichten (14), welche durch zwei Zwischenbleche (10) voneinander getrennt sind, sowie ein mittig angeordnetes Schicht-Segment (24)(28) mit zwei oder drei seitlichen an beiden Rändern einer Halbschale befindlichen Elastomerschichten (13,15), welche durch ein Zwischenblech (11) voneinander getrennt sind (Figur 2).

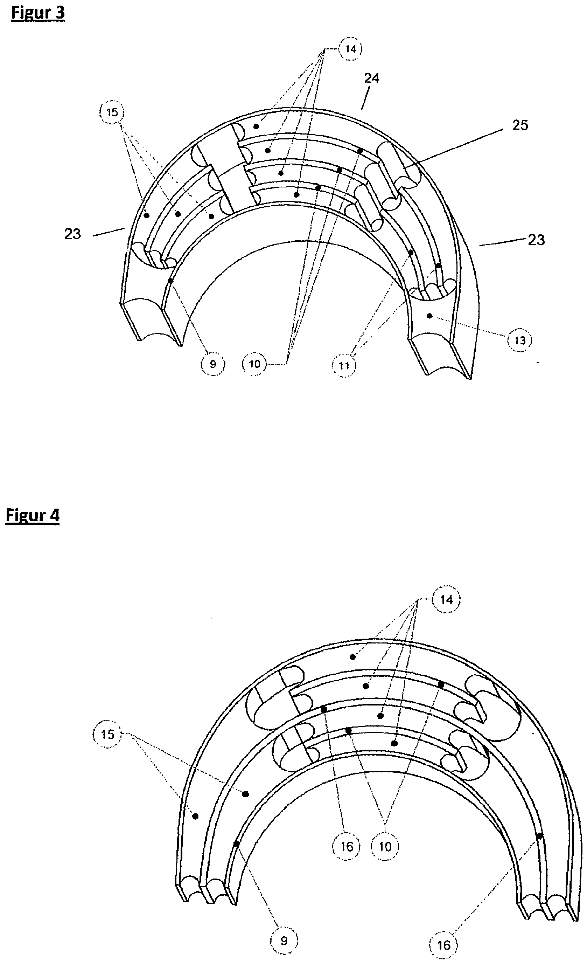

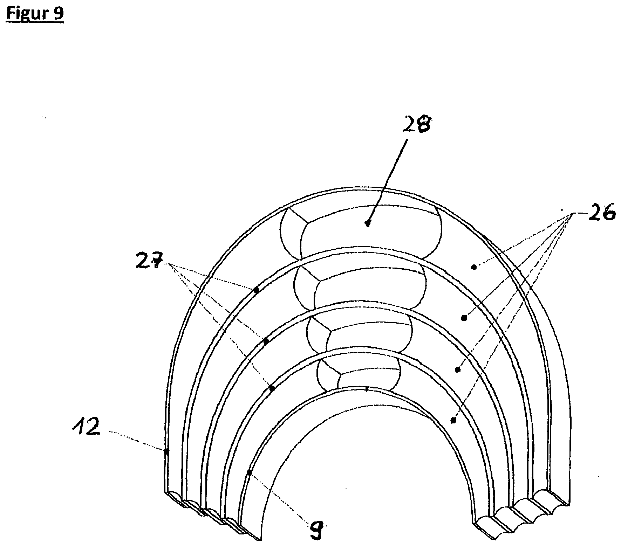

Gegenstand der Erfindung ist ferner eine exzentrische Spannbuchse (8), wobei jede Halbschale zwei Schicht-Segmente (23) umfasst mit vier vertikal oder mittig, bzw. in Längsrichtung ausgerichteten Elastomerschichten (14), welche durch drei Zwischenbleche (10) voneinander getrennt sind, sowie ein mittig angeordnetes Schicht-Segment (24)(28) mit zwei, drei oder vier seitliche an beiden Rändern einer Halbschale befindlichen Elastomerschichten (13, 15), welche jeweils also durch zwei oder mehr Zwischenbleche (Figur 4, 5, 7, 9) voneinander getrennt sind.

Wie oben beschrieben weisen die Halbschalenelemente (7) und (8) der erfindungsgemäßen nicht-kreisförmigen exzentrischen Spannbuchse entsprechend geformte Schichten aus Elastomeren und Schichten aus Blechen auf. Da bei Verspannung der Buchse durch entsprechende Spannmittel größere Mengen an Elastomermaterial zusammengepresst werden, muss, damit die Steifigkeit in der bevorzugten vertikalen Richtung nicht zu groß und somit die gewünschte Dämpfung bzw. Schallentkopplung nicht zu gering wird, Platz in jedem Schalenelement vorhanden sein, welcher von zwischen zwei Blechen befindlichem und herausgedrücktem Elastomermaterial eingenommen werden kann. Somit nehmen die einzelnen Schichten aus Blechen und Elastomer nicht den gesamten Innenraum eines jeden Halbschalenelementes (7) (6) ein, sondern diese Buchsenelemente umfassen verschieden Segmente (23) (24), gebildet aus den genannten Elastomer-/Blechschichten, die sich zwischen äußerem Blech (12) und innerem Blech (9) eines Halbschalenelementes erstrecken und diesen Raum ausfüllen. Die einzelnen Segmenten sind im Bereich gegenüberliegender Elastomerschichten dabei durch Trennfugenfenster (25) voneinander getrennt, die sich ebenfalls zwischen den Blechen (12) (9) erstrecken. Diese Trennfugenfenster ermöglichen die Aufnahme von zwischen den Blechschichten herausgedrücktes Elastomer bei Verspannung der Halbschalenelemente gegeneinander. Durch Variation der Breite der Schichten und der Größe der Buchse, bzw. ihrer Längsausdehnung (vertikal) im Verhältnis zur Querausdehnung (horizontal) im Betriebszustand können so über einen großen Bereich die gewünschten Dämpfungseigenschaften eingestellt werden. Weiterhin kann durch Elastomermaterial unterschiedlicher Dämpfung in dem vertikalen bzw. horizontalen Segmenten auf die Dämpfungseigenschaften im gewünschten Sinne eingewirkt werden. Jedes Halbschalenelement (6) (7) weist erfindungsgemäß drei oder mehr, vorzugsweise drei der beschriebenen Segmente (23) (24) auf, die in einem bestimmten Abstand zwischen den Begrenzungsflächen aus Blech (12) (9) verteilt sind. Die Segmente aus Elastomer- und Blechschichten weisen an ihren Rändern vorzugsweise konkave Aussparungen in der Elastomerschicht auf, die zusammen mit dem Raum zwischen den Segmenten die besagten Trennfugenfenster (25) bilden, welche bei Verspannung der Buchse teilweise oder gänzlich mit hineingepressten Elastomermaterial ausgefüllt sind.

Jede Halbschale besitzt erfindungsgemäß zwei seitliche / horizontale Segmente (23), welche die gekrümmte Halbschale abschließen und im wesentlichen die Trennebene zur anderen Halbschale in der Weise bildet, dass die Stirnseiten der Elastomerschichten und der Bleche des oberen (7) und des unteren (6) Halbschalenelementes aufeinander zu liegen kommen. Die Stirnseiten der zur Trennebene gerichteten Elastomerschichten ein jeder Schale weisen entsprechend einer Ausführungsform der Erfindung konkave Aussparungen auf. In diesen Fällen reichen das äußere Blech (12) und das innere den zylindrischen Hohlraum bildende Blech (9) gleichermaßen bis zur Trennebene der Halbschalenelemente. Um die Buchsen in der horizontalen Richtung quer zur Achse (4) steifer zu machen, müssen die Trennfugenfenster ganz oder zumindest weitgehend durch Elastomermaterial geschlossen sein.

Jede Halbschale besitzt neben den beiden beschrieben seitlichen Segmenten (23) ein oder mehrere, vorzugsweise ein mittleres / vertikales Segment (24) (vertikal zur Achse (4)), welches die eigentliche vertikal zur Achse (4) auftretende Dämpfungsarbeit zu leisten hat. Wie bereits anfangs festgestellt, ist erfindungsgemäß die Anzahl der Elastomerschichten / Bleche / Elastomerschichten in diesem mittleren Segment (24) größer als in den beiden seitlichen, horizontal ausgerichteten Segmenten (23), wodurch erst der beschriebene erfinderische Effekt erreicht werden kann. Das mittlere Segment kann drei, vier, fünf, sechs oder mehr Elastomerschichten (14) und entsprechend viele Zwischenbleche (10) aufweisen, während die beiden seitlichen Segmente (23) mindestens eine Elastomerschicht (15) oder ein Zwischenblech (11) weniger besitzt. Das mittlere Segment kann aber auch ein "Leersegment" mit "Leerschichten" sein, also ein Segment, welches nur teilweise oder gar keine Elastomerschichten aufweist.

Jedes der vorzugsweise drei Segmente (23) (24) einer Halbschale oder Halbbuchse nimmt etwa 1/3 des Volumens einer Halbbuchse ein. Die beiden seitlichen / horizontal angeordneten Segmente (23) können zusammen 60 - 80% des Volumens einnehmen, während der mittlere Bereich (24) 20 - 40% des Volumens einnimmt. Durch Variieren dieser geometrischen Parameter kann ebenfalls die Dämpfungseigenschaft der exzentrischen Buchse verändert werden.

Die Erfindung gemäß der genannten Merkmale dient insbesondere auch dazu, bei vorhandenen Anlagen weichere Buchsen einbauen zu können, ohne große Konstruktionsänderungen vornehmen zu müssen. Sie ist jedoch auch dazu geeignet, bei Neukonstruktionen die Buchsen einfach schmaler zu bauen und trotzdem in einer größeren Höhe auszuführen. Somit erhält die Buchse optimale Körperschalleigenschaften bei deutlich kleinerer Baugröße, was zur Einsparung von Material insbesondere für die Klemmhälften (1) und (2), die zur Befestigung der Buchsen erforderlich sind, führt.

Ein typisches mittleres/vertikales Segment (24) gemäß der Erfindung wird gebildet aus drei Elastomerschichten (14) und zwei Zwischenblechen (10). Ein anderes typisches mittleres Segment (24) wird gebildet aus vier Elastomerschichten (14) und drei Zwischenblechen (10). Ein weiteres typisches mittleres Segment (24) wird gebildet aus fünf Elastomerschichten (14) und vier Zwischenblechen (10).

Demnach weist eine typische obere (7) oder untere (6) Halbschale der Erfindung (i) ein mittleres/vertikales Segment (24), das aus drei Elastomerschichten (14) und zwei Zwischenblechen (10) zusammengesetzt ist, und (ii) zwei seitliche/horizontale Segmente (23) auf, bei denen jedes aus mindestens zwei Elastomerschichten (15) und einem Zwischenblech (11) zusammengesetzt ist.

Ein andere typische obere (7) oder untere (6) Halbschale der Erfindung weist (i) ein mittleres/vertikales Segment (24), das aus vier Elastomerschichten (14) und drei Zwischenblechen (10) zusammengesetzt ist, und (ii) zwei seitliche/horizontale Segmente (23) auf, bei denen jedes aus einer, zwei oder drei Elastomerschicht(en) (15) und keinem, einem oder zwei Zwischenblech(en) (11) zusammengesetzt ist.

Ein weitere typische obere (7) oder untere (6) Halbschale der Erfindung weist (i) ein mittleres/vertikales Segment (24), das aus fünf Elastomerschichten (14) und vier Zwischenblechen (10) zusammengesetzt ist, und (ii) zwei seitliche/horizontale Segmente (23) auf, bei denen jedes aus einer, zwei, drei oder vier Elastomerschicht(en) (15) und keinem, einem, zwei oder drei Zwischenblech(en) (11) zusammengesetzt ist.

Ein weitere typische obere (7) oder untere (6) Halbschale der Erfindung weist (i) ein mittleres/vertikales Segment (24), das aus vier Leerschichten (14) und drei Zwischenblechen (10) zusammengesetzt ist, und (ii) zwei seitliche/horizontale Segmente (23) auf, bei denen jedes aus einer, zwei, drei oder vier Elastomerschicht(en) (15) und keinem, einem oder zwei oder drei Zwischenblech(en) (11) zusammengesetzt ist.

In einer besonderen Ausführungsform besteht das mittleres Segment aus drei oder vier Leerschichten (28). Die Halbschale weist in diesem Fall zwei oder drei durchgehende Zwischenbleche (27) auf, die das mittlere Segment (24) stabilisieren.

In einer weiteren Ausführungsform besteht das mittlere/vertikale Segment (24) aus vier Schichten, wobei sich Elastomerschichten und Leerschichten abwechseln. Die seitlichen Segmente (23) bestehen in dieser Ausführungsform vorzugsweise jeweils aus drei oder vier Elastomerschichten.

Die Anzahl der Elastomerschichten und Bleche richtet sich auch nach der Größe bzw. Dicke der Spannbuchse.

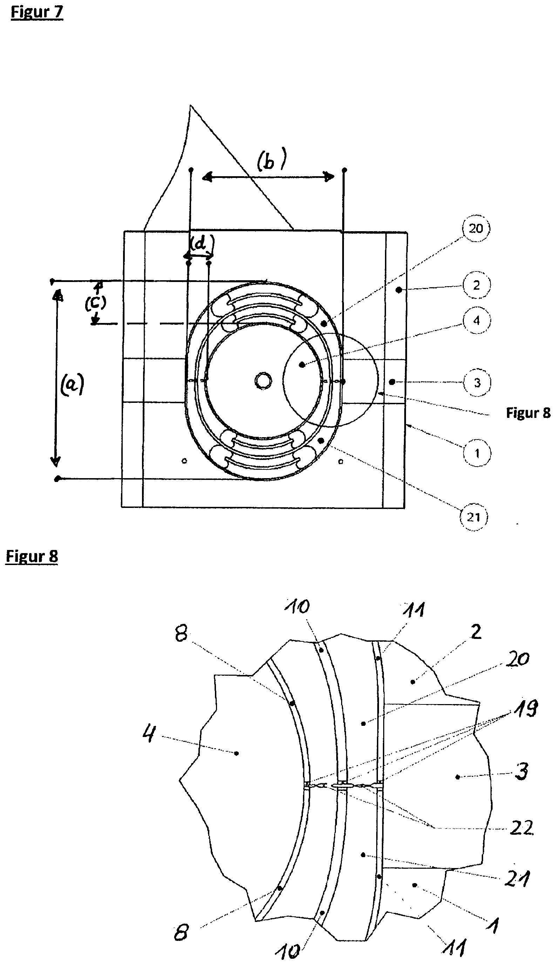

Bei größeren Buchsen mit entsprechenden Längs- und Querdurchmessern kann es notwendig werden, diese zu stabilisieren, damit keine irreversiblen Verformungen der Buchse beim Verspannen auftreten. Erfindungsgemäße wird dieses Problem durch Einbringung eines durch die Halbschale (6) (7) hindurchgehenden Zwischenblechs (16) gelöst (Figur 4, 5, 7), welches vorzugsweise mittig den durch die Bleche (12) und (9) gebildeten Raum unterteilt, und demnach gegebenenfalls auch an Stelle des Zwischenblechs (10) (11) in den seitlichen Segmenten (23) und dem /den mittleren Segment(en) (24) tritt. Wie in den Figuren 4 und 7 dargestellt, kann dieses durchgehende Blech (16) das einzige Zwischenblech der seitlichen Segmente (23) sein. Dieses verhindert somit das Ausknicken bei höheren Lasten und / oder Vorspannkräften.

Erfindungsgemäße Halbbuchsen, welche Leerschichten in den mittleren Segmenten aufweisen, enthalten als Zwischenbleche mindestens ein durchgehendes Zwischenblech (16) (27). Vorzugsweise sind hier alle Zwischenbleche durchgehend.

In einer anderen Ausführungsform, ist das äußere, die Form der Buchse bestimmende Blech (12) kürzer als das innere Blech (9) und reicht somit nicht bis zur Trennebene. Dadurch entsteht im Bezug zur Trennebene ein Vorspannversatz(17), der für entsprechend der Größe der eingesetzten Buchsen zwischen etwa 1 und 5 mm liegt. Durch Verspannen der Spannbuchse, wird das äußere Schalenblech (12) ein jeder Halbschale bis zur Trennebene gedrückt (bis auf eine Toleranzabweichung), wobei entsprechendes Elastomermaterial mitbewegt wird. Um die Toleranzen noch besser auszugleichen, können die Enden der Schichten herausstehendes Elastomer in Form einer Vorspannbeule (18) aufweisen. Diese schließt den durch Toleranzen entstehenden Spalt. Figur 7 und 8 zeigen dies für den verspannten Zustand.

Da die Toleranz im Elastomerteil einfacher herzustellen ist als an den Blechschalen, sind diese stirnseitig mit Elastomer (19) von etwa 1 - 3 mm Dicke überzogen. Ferner ist diese Schicht elastisch und kann sich gegebenen Toleranzen damit besser anpassen als dies bei den Blechen (9) (12) (11)(10) und (16) der Fall wäre. Überschüssiger Werkstoff wird also gleichzeitig in der Schicht mit geringer Schubkraft torsional weggedrückt. Da die Buchse an der Trennstelle nach innen durch die Achse (4) und nach außen durch das Distanzstück (3) (als Teil des Klemmschuhs (1) (2)) abgeschottet ist, bleibt das bei toleranzbedingt engem Spalt überschüssige Elastomer innerhalb der Schicht und wird in dieser verteilt. Diese Ausführungsform der Erfindung ist für eine Spannbuchse (8) mit zwei Horizontalschichten und vier Vertikalschichten beschrieben. Es kann aber auch für alle oben aufgezählten Schichtkombinationen verwendet werden.

Gegenstand der Erfindung ist somit auch eine entsprechende Spannbuchse, bei welcher das Außenblech (12) einer Halbschale kürzer als das Innenblech (9) ist und so im ungespannten Zustand der Spannbuchse ein Vorspannversatz (17) gebildet wird, und weiter die Elastomerschichten (15) der seitlichen an die Trennebene der beiden Halbschalen grenzenden Segmente an ihren zur Trennebene weisenden Enden als konvexer Wulst (18) ausgebildet sind, so dass bei Vorspannung der Buchse der Vorspannversatz (17) gegen Null geht, wodurch Außen-, Innen- und ggf. Zwischenbleche durch das zwischen ihnen befindliche zusammengepresste Elastomermaterial auf Abstand gehalten werden und somit eine erhöhte horizontale quer zur Buchsenachse (4) gerichtete Steifigkeit erzielt wird.

Die erfindungsgemäße Spannbuchse (8) befindet sich, wie in den Abbildungen 1 und 8 dargestellt, in einem Klemmschuh, der eine obere (2) und untere (1) Klemmhälfte umfasst. Die Klemmhälften besitzen Aussparungen, welche die gleiche geometrische (gekrümmte) Kontur wie die äußeren Halbschalenelemente (7) (8) aufweisen, so dass diese bündig aufgenommen werden können. Die Klemmhälften reichen vorzugsweise nicht bis auf die Trennebene der beiden Schalenhälften hinunter, um einen leichteren Ein- und Ausbau sicherzustellen. In diesem Fall umfasst der Klemmschuh zusätzlich ein Abstandsstück (3), welches nach Einbau der erfindungsgemäßen Spannbuchse in die obere bzw. untere Klemmhälfte zwischen die beiden Klemmhälften geschoben wird. Die Abstandsstücke können als lose Zusatzteile komplett an eine Klemmhälfte oder jeweils hälftig an den Klemmhälften (1) (2) befestigt werden. Das ist insbesondere bei Nachrüstung bestehender Anlagen zur Verbesserung der Schallübertragung vorteilhaft.

In einer einfachen Ausführungsform sind die Klemmhälften verlängert, so dass sie bis zur Trennebene der Halbschalenelemente reichen. Ein-, Aus- und Umbau der erfindungsgemäßen Buchsen ist bei dieser Variante zwar möglich aber erschwert.

Die Verspannung des Klemmschuhs mit eingelegter Spannbuchse (8) erfolgt durch Spannvorrichtungen. Beispielsweise kann dies über Spannschrauben, die in entsprechende vertikal durch die Klemmhälften und ggf. Abstandsstücke geführt werden, erfolgen.

Üblicherweise dienen zwei Klemmschuhe mit jeweils einer erfindungsgemäßen Spannbuchse (8) zur Befestigung einer Getriebe-Drehmomentstütze (5) gemäß Abbildung 1. Die Achse (4) wir dabei durch eine entsprechende Bohrung in der Drehmomentstütze geführt, und links und

rechts von dieser befindet sich ein entsprechender Klemmschuh mit einer erfindungsgemäßen Spannbuchse (8). Die Klemmschuhe sind an dem Maschinenträger befestigt, in der Regel angeschraubt.

Gegenstand der Erfindung ist somit auch ein Klemmschuh umfassend eine untere (1) und obere (2) Klemmhälfte, welcher die Spannbuchse (8) sowie die durch diese zentral geführte mit der Drehmomentstütze (5) verbundene Buchsenachse (4) umschließt, wobei die Klemmhälften durch Spannmittel gegeneinander verspannt werden und so die Spannbuchse vorspannen, so dass die vorwiegend in Längsausrichtung der Spannbuchse vertikal zur Achse (4) auftretenden Schwingungen der an der Drehmomentstütze (5) angebrachten Maschinenteile gedämpft werden.

Die Bleche der Halbbuchsenelemente (7) und (8) sind aus vorzugsweise harten, widerstandsfähigen aber in der Regel nicht zu spröden Materialien gefertigt. Dies sind vorzugsweise Metalle oder Metallegierungen, können aber auch in Einzelfällen Hartkunststoffe, Keramikmaterialien oder Carbonfasern sein, oder diese Stoffe zusätzlich enthalten. Als geeignete Metalle sind vor allem Eisen und Stähle, Chrom-/Vanadium-Stähle, Leichtmetalle wie z.B. Aluminium, Titan, Zirkonium oder Tantal zu nennen oder auch Legierungen, die diese Metalle enthalten. Vorzugsweise finden Eisenbleche Verwendung.

Die für die erfindungsgemäßen Spannbuchsen verwendeten Elastomere, gegebenenfalls mit unterschiedlicher Härte, sind im Stand der Technik bekannt und in der einschlägigen Literatur hinreichend beschrieben. Vorzugsweise werden handelsübliche Naturkautschuke oder Kunststoffe eingesetzt. Beispiele für geeignete Elastomere sind: Naturkautschuk, Isopren-, Butadien-, Polynorbonen-, Chloropren-, Styrolbutadien-, Butyl-, Äthylenpropylen-, Nitril-, Polyurethan-, Acrylat-, Äthylenacrylat, Silicon- oder Fluor- Kautschuke bzw. Kunststoffe. Die für diese Erfindung verwendeten Elastomermaterialien bestehen vorzugsweise im wesentlichen aus einem Naturkautschuk, einem Naturkautschukderivat oder aus einem geeigneten elastischen polymeren Kunststoff oder Kunststoffgemisch. Die Elastomerschicht kann erfindungsgemäß unterschiedliche Härte ("Shore-Härte") und unterschiedliche Dämpfungseigenschaften aufweisen, entsprechend den gewünschten Anforderungen. Vorzugsweise werden Elastomere mit einer Härte von 20 bis 100 Shore, insbesondere 40 bis 80 Shore verwendet. Die Herstellung von Elastomeren unterschiedlicher Härte ist im Stand der Technik hinreichend beschrieben. Durch Einsatz von Elastomeren mit unterschiedlicher Härte in den verschiedenen (mittleren bzw. seitlichen) Segmenten, kann ebenfalls Einfluss auf die geforderte unterschiedliche (vertikal / horizontal) Dämpfung genommen werden.

Die erfindungsgemäßen Spannbuchsen bzw. Klemmschuhe sind für den Einsatz in Windkraftanlagen entwickelt worden, um die dort auftretenden Schwingungen und durch Schwingungen erzeugte Geräusche zu reduzieren oder zu eliminieren. Sie sind allerdings auch für den Einsatz in anderen Maschinen-/Getriebeanlagen, in denen ähnliche Schwingungsprobleme auftreten geeignet.

### Beschreibung der Bezugsgrößen:

| | |
|---|---|
| 1 | Klemmhälfte unten |
| 2 | Klemmhälfte oben |
| 3 | Abstandsstück |
| 4 | Buchsenachse (Verbindung zur Drehmomentstütze) durch Lagerauge (20) geführt |
| 5 | Getriebe-Drehmomentstütze |
| 6 | Unteres Halbschalenelement |
| 7 | Oberes Halbschalenelement |
| 8 | Spanbuchse (bestehend aus zwei Halbschalen) |
| 9 | Innenblech |
| 10 | Zwischenblech mittleres/vertikales Segment |
| 11 | Zwischenbleche seitliches/horizontales Segment |
| 12 | Außenblech |
| 13 | Elastomerschicht Rand |
| 14 | Elastomerschicht mittleres Segment |
| 15 | Elastomerschicht seitliches Segment |
| 16 | Zwischenblech durch die Halbbuchse durchlaufend |
| 17 | Vorspannversatz |
| 18 | Vorspannbeule aus Elastomer |
| 19 | Elastomerüberzug Stirnseite Bleche |
| 20 | Lagerauge zur Aufnahme der Buchsenachse (4) |
| 23 | Schichtsegment seitlich (horizontale Ausrichtung) |
| 24 | Schichtsegment mittig (vertikale Ausrichtung) |
| 25 | Trennfugenfenster |
| 26 | Elastomerschicht seitliches Segment bei Ausführungsform der Figur 9 |
| 27 | Durch die Halbbuchse laufende Zwischenbleche |
| 28 | Leerschichten des mittleren (vertikalen) Segments |
| a | Dicke der Halbschale in vertikaler Richtung - mittig (größte Dicke) |
| b | Dicke der Halbschale in horizontaler Richtung - seitlich (geringste Dicke) |
| c | Außendurchmesser der Buchse (8) in Längsrichtung (vertikal zur Achse (4)) |
| d | Außendurchmesser der Buchse (8) in Querrichtung |

### Beschreibung der Abbildungen:

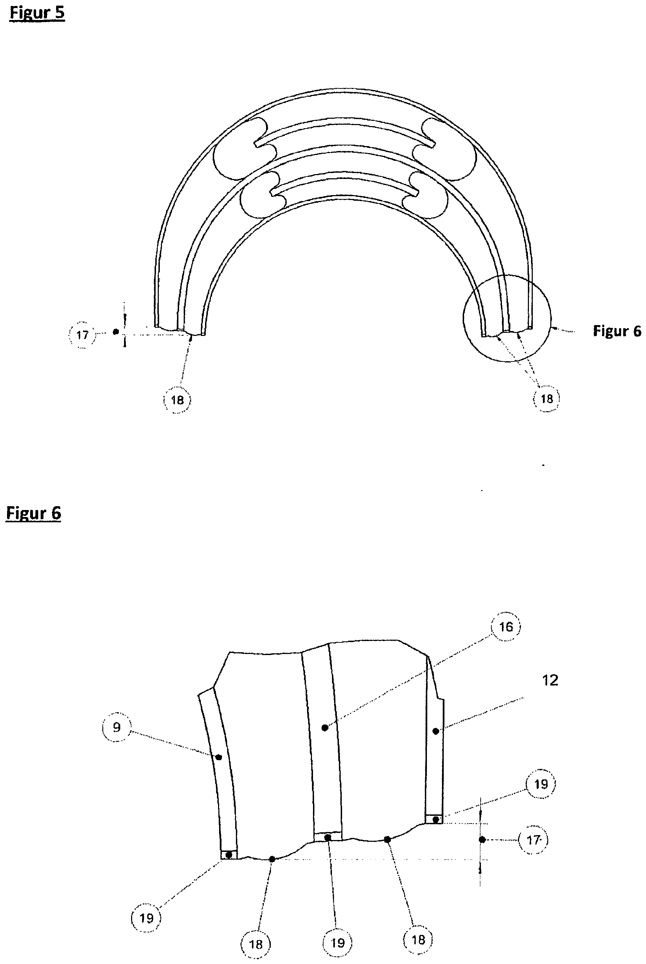

Figur 1: Befestigung einer Drehmomentstütze mittels zweier Klemmschuhe mit eingebauten erfindungsgemäßen exzentrischen Spannbuchsen in 3D-Sicht.
Figur: 2: 3D-Ansicht eines Halbschalenelementes gemäß der Erfindung mit einem mittleren Segment aus drei Elastomerschichten (zwei Zwischenblechen) und zwei seitlichen Segmenten mit zwei Elastomerschichten (einem Zwischenblech).
Figur: 3: 3D-Ansicht eines Halbschalenelementes gemäß der Erfindung mit einem mittleren Segment aus vier Elastomerschichten (drei Zwischenblechen) und zwei seitlichen Segmenten mit drei Elastomerschichten (zwei Zwischenblechen).
Figur: 4: 3D-Ansicht eines Halbschalenelementes gemäß der Erfindung mit einem mittleren Segment aus vier Elastomerschichten (zwei Zwischenblechen plus ein durchgehendes Zwischenblech) und zwei seitlichen Segmenten mit zwei Elastomerschichten (einem durchgehenden Zwischenblech).
Figur: 5: Draufsicht (Längsschnitt) eines Halbschalenelementes gemäß der Erfindung mit einem mittleren Segment aus vier Elastomerschichten (zwei Zwischenblechen plus ein durchgehendes Zwischenblech) und zwei seitlichen Segmenten mit zwei Elastomerschichten (einem durchgehenden Zwischenblech). Die äußere Schale ist gegenüber der inneren Schale um den Vorspannversatz (17) kürzer. Die Enden der Elastomerschichten weisen Vorspannbeulen (18) auf
Figur: 6: Zeigt das rechte Ende der Halbschale aus Abb. 5 in vergrößerter Darstellung. Die Stirnflächen der Außen-, Innen- und Zwischenbleche sind mit Elastomermaterial überzogen.
Figur 7: zeigt einen Längsschnitt durch einen Klemmschuh mit geschlossenem Spalt an der Trennflächen der Halbschalenelemente bedingt durch die Konstruktion nach Abb. 6.
Figur 8: zeigt den in Abb. 7 markierten Ausschnitt in vergrößerter Darstellung.
Figur 9: zeigt ein Halbschalenelement gemäß der Erfindung mit vier Elastomerschichten in den seitlichen Segmenten, die von einem mittleren Segment, welches elastomerfreie Schichten (Leerschichten) aufweist, getrennt sind, sowie mit drei durchgehenden Zwischenblechen.

## Patentansprüche

1. Exzentrische Spannbuchse mit auch im gespannten Zustand exzentrischer Geometrie umfassend ein oberes (7) und ein unteres (6) Halbschalenelement, die aufeinander liegend eine Vollschale bilden, welche im Längsschnitt eine ovale, ellipsenähnliche oder bogenförmig-rechteckige Kontur aufweist, deren lange Achse senkrecht zur Fläche der beiden aufeinanderliegenden Halbschalenelemente (6) (7) ausgerichtet ist, wobei jedes dieser Schalenelement zusammengesetzt ist aus einem äußeren besagte Längsschnittkontur aufweisenden Halbschalenblech (12) und einem inneren Halbschalenblech (9), wobei letzteres im Längsschnitt eine halbkreisförmige Kontur besitzt und bei Aufeinanderliegen zusammen mit dem inneren identischen Halbschalenblech des anderen Halbschalenelementes einen zylindrischen Hohlraum bildet, der die Spannbuchsenachse (4) aufnimmt und diese nach Zusammenfügung der Halbschalenelemente zur kompletten Spannbuchse (8) und deren Verspannung fest umschließt,
**dadurch gekennzeichnet, dass** das äußere (12) und innere (9) Halbschalenblech eines jeden Halbschalenelementes (6) (7) durch zwei seitliche Segmente (23) und ein mittleres Segment (24) miteinander fest verbunden sind, welche analog dem Halbschalenelement geformt sind und den Raum zwischen den Halbschalenblechen (9)(12) ausfüllen,
wobei
(i) die seitlichen Segmente (23) abwechselnd Elastomerschichten und Zwischenbleche mit mindestens zwei Elastomerschichten (15) und einem Zwischenblech (11) umfassen,
(ii) das mittlere Segment (24) abwechselnd Elastomerschichten und Zwischenbleche (10) (27) mit mindestens drei Elastomerschichten (14) und zwei Zwischenblechen (10) (27) umfasst, wobei alle Schichten diese Segments Elastomerschichten sind,
(iii) das Verhältnis von Außendurchmesser der aus zwei übereinander angeordneten Halbschalen zusammengesetzten Vollbuchse in vertikaler Richtung (a) zum Außendurchmesser der Halb- oder Vollbuchse in horizontaler Richtung (b) 1.2 bis 1.5 beträgt, so dass der Radius des äußeren Halbschalenblechs (12) und somit der Spannbuchse (8) in der horizontalen Ausdehnung kleiner ist als in der vertikalen Ausdehnung, und das Verhältnis der Schichtdicke in der Mitte der Halbbuchse in vertikaler Richtung (c) zu der Schichtdicke an der Stirnfläche der Halbbuchse in horizontaler Richtung (d) 1.5 bis 2.5 beträgt, so dass jede Halbschale als auch die Vollschale sowohl im entspannten als auch im vorgespannten Zustand exzentrisch in Bezug zur Buchsenachse (4) ist, und
(iv) die Anzahl der Elastomerschichten (15) und Bleche (11) der seitlichen Segmente (23) kleiner ist als die jeweilige Anzahl der Elastomerschichten (14) und Bleche (10)(27) des mittleren Segmentes eines Halbschalenelementes.

2. Spannbuchse nach Anspruch 1, **dadurch gekennzeichnet, dass** das mittlere Segment (24) vier Elastomerschichten (14) und drei Zwischenbleche (10) und jedes seitliche Segment (23) zwei oder drei Elastomerschichten (15) und ein oder zwei Zwischenbleche (11) aufweist, wobei ein Zwischenblech (10) und (11) durch ein durchgängiges Zwischenblech (16) ersetzt sein kann.

3. Exzentrische Spannbuchse mit auch im gespannten Zustand exzentrischer Geometrie umfassend ein oberes (7) und ein unteres (6) Halbschalenelement, die aufeinander liegend eine Vollschale bilden, welche im Längsschnitt eine ovale, ellipsenähnliche oder bogenförmig-rechteckige Kontur aufweist, deren lange Achse senkrecht zur Fläche der beiden aufeinanderliegenden Halbschalenelemente (6) (7) ausgerichtet ist, wobei jedes dieser Schalenelement zusammengesetzt ist aus einem äußeren besagte Längsschnittkontur aufweisenden Halbschalenblech (12) und einem inneren Halbschalenblech (9), wobei letzteres im Längsschnitt eine halbkreisförmige Kontur besitzt und bei Aufeinanderliegen zusammen mit dem inneren identischen Halbschalenblech des anderen Halbschalenelementes einen zylindrischen Hohlraum bildet, der die Spannbuchsenachse (4) aufnimmt und diese nach Zusammenfügung der Halbschalenelemente zur kompletten Spannbuchse (8) und deren Verspannung fest umschließt,
**dadurch gekennzeichnet, dass** das äußere (12) und innere (9) Halbschalenblech eines jeden Halbschalenelementes (6) (7) durch zwei seitliche Segmente (23) und ein mittleres Segment (24) miteinander fest verbunden sind, welche analog dem Halbschalenelement geformt sind und den Raum zwischen den Halbschalenblechen (9)(12) ausfüllen, wobei
(i) die seitlichen Segmente (23) abwechselnd Elastomerschichten und Zwischenbleche mit mindestens zwei Elastomerschichten (15) und einem Zwischenblech (11) umfassen,
(ii) das mittlere Segment (24) abwechselnd Elastomerschichten (14) oder Leerschichten (28) und Zwischenbleche (10) (27) mit mindestens drei Elastomerschichten oder Leerschichten und zwei Zwischenblechen umfasst, wobei mindestens eine Schicht dieses Segments eine Leerschicht ist,
(iii) das Verhältnis von Außendurchmesser der aus zwei übereinander angeordneten Halbschalen zusammengesetzten Vollbuchse in vertikaler Richtung (a) zum Außendurchmesser der Halb- oder Vollbuchse in horizontaler Richtung (b) 1.2 bis 1.5 beträgt, so dass der Radius des äußeren Halbschalenblechs (12) und somit der Spannbuchse (8) in der horizontalen Ausdehnung kleiner ist als in der vertikalen Ausdehnung, und das Verhältnis der Schichtdicke in der Mitte der Halbbuchse in vertikaler Richtung (c) zu der Schichtdicke an der Stirnfläche der Halbbuchse in horizontaler Richtung (d) 1.5 bis 2.5 beträgt, so dass jede Halbschale als auch die Vollschale sowohl im entspannten als auch im vorgespannten Zustand exzentrisch in Bezug zur Buchsenachse (4) ist, und
(iv) die Anzahl der Elastomerschichten (15) und Bleche (11) der seitlichen Segmente (23) kleiner oder gleich der Anzahl der Elastomerschichten (14) oder Leerschichten (28) und Bleche (10)(27) des mittleren Segmentes eines Halbschalenelementes ist.

4. Spannbuchse nach Anspruch 3, **dadurch gekennzeichnet, dass** das mittlere Segment (24) abwechselnd Elastomerschichten (14) und Leerschichten (28) aufweist.

5. Spannbuchse nach Anspruch 3, **dadurch gekennzeichnet, dass** alle Schichten des mittleren Segments (24) Leerschichten (28) sind.

6. Spannbuchse nach Anspruch 5, **dadurch gekennzeichnet, dass** das mittlere Segment (24) vier Leerschichten (28) und jedes seitliche Segment (23) vier Elastomerschichten (15) aufweist, wobei die Schichten (28) (15) in den unterschiedlichen Segmenten gleich dick sind und durch drei die Segmente durchlaufende Zwischenbleche (27) voneinander getrennt sind.

7. Spannbuchse nach einem der Ansprüche 1 - 6, **dadurch gekennzeichnet, dass** sie im eingebauten Zustand vertikal ausgerichtet ist, und somit die mittleren Segmente der Halbschalen vertikal und die seitlichen Segmente der Halbschalen horizontal ausgerichtet sind

8. Spannbuchse nach einem der Ansprüche 1 - 7, **dadurch gekennzeichnet, dass** die Segmente (23) und (24) im Bereich der Elastomerschichten durch Trennfugenfenster (25) voneinander getrennt sind.

9. Spannbuchse nach einem der Ansprüche 1 - 8, **dadurch gekennzeichnet, dass** die Elastomerschichten in den seitlichen Segmenten (23) eine größere Shore-Härte aufweisen als in dem mittleren Segment (24).

10. Spannbuchse nach einem der Ansprüche 1 - 9, **dadurch gekennzeichnet, dass** die seitlichen Enden von jedem Halbschalenelement (6) (7) eine elastomere Trennschicht (13) aufweisen, welche durchgehend den Raum zwischen dem äußeren Halbschalenblech (12) und dem inneren Halbschalenblech (9) einnimmt.

11. Spannbuchse nach einem der Ansprüche 1 - 10, **dadurch gekennzeichnet, dass** die Elastomerschichten (15) der seitlichen Segmente (23) an ihren zur Trennebene der beiden Halbschalen weisenden Enden konkav gekrümmt sind.

12. Spannbuchse nach einem der Ansprüche 1 - 11, **dadurch gekennzeichnet, dass** ein Halbschalenelement (6) (7) mindestens ein alle Segmente verbindendes, durchlaufendes Zwischenblech (16) aufweist.

13. Klemmschuh umfassend eine untere (1) und obere (2) Klemmhälfte, welcher eine Spannbuchse (8) gemäß der Ansprüche 1 - 12 sowie die durch diese zentral geführte mit der Drehmomentstütze (5) verbundende Buchsenachse (4) umschließt, wobei die Klemmhälften durch Spannmittel gegeneinander verspannt werden und so die Spannbuchse vorspannen, so dass die vorwiegend in Längsausrichtung der Spannbuchse auftretenden Schwingungen der an der Drehmomentstütze (5) angebrachten Maschinenteile gedämpft werden.

14. Drehmomentstütze umfassend eine Spannbuchse oder einen Klemmschuh gemäß einem der Ansprüche 1 - 13.

15. Verwendung einer Spannbuchse, eines Klemmschuhs oder einer Drehmomentstütze gemäß der Ansprüche 1 bis 14 zur Dämpfung und / oder Schallentkopplung von vorwiegend vertikalen bzw. in Längsausrichtung der Spannbuchse auftretenden Schwingungen in Windkraftanlagen.

## Claims

1. Eccentric clamping bushing having a geometry which is also eccentric in the tensioned state, comprising an upper half-shell element (7) and a lower half-shell element (6), which, lying one on top of the other, form a full shell which has in longitudinal section an oval, ellipsoid or arcuate-rectangular contour whose long axis is aligned perpendicular to the surface of the two half-shell elements (6) (7) lying one on top of the other, where each of these shell elements is composed of an outer half-shell plate (12) having said longitudinal section contour and an inner half-shell plate (9), where the latter has in longitudinal section a semi-circular contour and, together with the inner identical half-shell plate of the other half-shell element when they lie one on top of the other, forms a cylindrical cavity which accommodates the clamping bushing axle (4) and firmly surrounds the latter after the half-shell elements have been joined together to form the complete clamping bushing (8) and tensioning thereof,
**characterised in that** the outer half-shell plate (12) and the inner half-shell plate (9) of each half-shell element (6) (7) are firmly connected to one another by two side segments (23) and a central segment (24), which are shaped analogously to the half-shell element and fill the space between the half-shell plates (9) (12), where
(i) the side segments (23) comprise alternating elastomer layers and intermediate plates with at least two elastomer layers (15) and one intermediate plate (11),
(ii) the central segment (24) comprises alternating elastomer layers and intermediate plates (10) (27) with at least three elastomer layers (14) and two intermediate plates (10) (27), where all layers of this segment are elastomer layers,
(iii) the ratio of the outside diameter of the full bushing, composed of two half shells arranged one above the other, in the vertical direction (a) to the outside diameter of the half or full bushing in the horizontal direction (b) is 1.2 to 1.5, so that the radius of the outer half-shell plate (12) and thus of the clamping bushing (8) in the horizontal dimension is less than in the vertical dimension, and the ratio of the layer thickness in the centre of the half bushing in the vertical direction (c) to the layer thickness at the front face of the half bushing in the horizontal direction (d) is 1.5 to 2.5, so that each half shell and also the full shell is eccentric in relation to the bushing axle (4), both in the untensioned state and also in the pretensioned state, and
(iv) the number of elastomer layers (15) and plates (11) of the side segments (23) is smaller than the respective member of elastomer layers (14) and plates (10) (27) of the central segment of a half-shell element.

2. Clamping bushing according to Claim 1, **characterised in that** the central segment (24) has four elastomer layers (14) and three intermediate plates (10) and each side segment (23) has two or three elastomer layers (15) and one or two intermediate plates (11), where one intermediate plate (10) or (11) may be replaced by a continuous intermediate plate (16).

3. Eccentric clamping bushing having eccentric geometry even in the tensioned state, comprising an upper half-shell element (7) and a lower half-shell element (6), which, lying one on top of the other, form a full shell which has in longitudinal section an oval, ellipsoid or arcuate-rectangular contour whose long axis is aligned perpendicular to the surface of the two half-shell elements (6) (7) lying one on top of the other, where each of these shell elements is composed of an outer half-shell plate (12) having said longitudinal section contour and an inner half-shell plate (9), where the latter has in longitudinal section a semi-circular contour and, together with the inner identical half-shell plate of the other half-shell element when they lie one on top of the other, forms a cylindrical cavity which accommodates the clamping bushing axle (4) and firmly surrounds the latter after the half-shell elements have been joined together to form the complete clamping bushing (8) and tensioning thereof, **characterised in that** the outer half-shell plate (12) and the inner half-shell plate (9) of each half-shell element (6) (7) are firmly connected to one another by two side segments (23) and a central segment (24), which are shaped analogously to the half-shell element and fill the space between the half-shell plates (9) (12), where
(i) the side segments (23) comprise alternating elastomer layers and intermediate plates with at least two elastomer layers (15) and one intermediate plate (11),
(ii) the central segment (24) comprises alternating elastomer layers (14) or empty layers (28) and intermediate plates (10) (27) with at least three elastomer layers or empty layers and two intermediate plates, where at least one layer of this segment is a empty layer,
(iii) the ratio of the outside diameter of the full bushing, composed of two half shells arranged one above the other, in the vertical direction (a) to the outside diameter of the half or full bushing in the horizontal direction (b) is 1.2 to 1.5, so that the radius of the outer half-shell plate (12) and thus of the clamping bushing (8) in the horizontal dimension is less than in the vertical dimension, and the ratio of the layer thickness in the centre of the half bushing in the vertical direction (c) to the layer thickness at the front face of the half bushing in the horizontal direction (d) is 1.5 to 2.5, so that each half shell and also the full shell is eccentric in relation to the bushing axle (4), both in the untensioned state and also in the pretensioned state, and
(iv) the number of elastomer layers (15) and plates (11) of the side segments (23) is smaller than or equal to the number of elastomer layers (14) or empty layers (28) and plates (10) (27) of the central segment of a half-shell element.

4. Clamping bushing according to Claim 3, **characterised in that** the central segment (24) has alternating elastomer layers (14) and empty layers (28).

5. Clamping bushing according to Claim 3, **characterised in that** all layers of the central segment (24) are empty layers (20).

6. Clamping bushing according to Claim 5, **characterised in that** the central segment (24) has four empty layers (28) and each side segment (23) has four elastomer layers (15), where the layers (28) (15) in the different segments have the same thickness and are separated from one another by three intermediate plates (27) running through the segments.

7. Clamping bushing according to one of Claims 1 - 6, **characterised in that** it is vertically aligned in the installed state, and so the central segments of the half shells are aligned vertically and the side segments of the half shells are aligned horizontally.

8. Clamping bushing according to one of Claims 1 - 7, **characterised in that** the segments (23) and (24) are separated from one another in the region of the elastomer layers by separating joint windows (25).

9. Clamping bushing according to one of Claims 1 - 8, **characterised in that** the elastomer layers have a greater Shore hardness in the side segments (23) than in the central segment (24).

10. Clamping bushing according to one of Claims 1 - 9, **characterised in that** the side ends of each half-shell element (6) (7) have an elastomeric separating layer (13), which is present throughout the space between the outer half-shell plate (12) and the inner half-shell plate (9).

11. Clamping bushing according to one of Claims 1 - 10, **characterised in that** the elastomer layers (15) of the side segments (23) are curved in a concave manner at their ends facing the separating plane of the two half shells.

12. Clamping bushing according to one of Claims 1 - 11, **characterised in that** one half-shell element (6) (7) has at least one continuous intermediate plate (16) connecting all segments.

13. Clamp shoe comprising a lower clamp half (1) and an upper clamp half (2), which surrounds a clamping bushing (8) according to Claims 1 - 12 and the bushing axle (4), which is passed centrally through the latter and is connected to the torque bracket (5), where the clamp halves are tensioned against one another by tensioning means and thus pretension the clamping bushing, so that the vibrations of the machine parts mounted on the torque bracket (5), which occur predominantly in the longitudinal direction of the clamping bushing, are damped.

14. Torque bracket comprising a clamping bushing or a clamp shoe according to one of Claims 1 - 13.

15. Use of a clamping bushing, clamp shoe or torque bracket according to Claims 1 to 14 for damping and/or sound decoupling of vibrations in wind turbines which occur predominantly vertically or in the longitudinal direction of the clamping bushing.

## Revendications

1. Douille de serrage excentrée présentant une géométrie qui est également excentrée dans l'état sous tension, comprenant un élément de demi-coque supérieur (7) et un élément de demi-coque inférieur (6), lesquels éléments, en superposition l'un sur l'autre, forment une coque entière qui présente, en coupe longitudinale, un contour ovale, ellipsoïdal ou arqué-rectangulaire dont l'axe long est aligné perpendiculairement à la surface des deux éléments de demi-coque (6) (7) en superposition l'un sur l'autre, où chacun de ces éléments de demi-coque est composé par une plaque de demi-coque externe (12) présentant ledit contour en coupe longitudinale et par une plaque de demi-coque interne (9), où cette dernière présente en coupe longitudinale un contour semi-circulaire et, en association avec la plaque de demi-coque identique interne de l'autre élément de demi-coque lorsqu'ils sont en superposition l'un sur l'autre, forme une cavité cylindrique qui loge l'axe de douille de serrage (4) et entoure fermement ce dernier après que les éléments de demi-coque ont été joints ensemble afin de former la douille de serrage complète (8) et après leur mise sous tension,
**caractérisée en ce que** la plaque de demi-coque externe (12) et la plaque de demi-coque interne (9) de chaque élément de demi-coque (6) (7) sont fermement connectées l'une à l'autre par deux segments latéraux (23) et par un segment central (24), lesquels segments sont conformés de manière analogue à l'élément de demi-coque et remplissent l'espace entre les plaques de demi-coque (9) (12), où
(i) les segments latéraux (23) comprennent des couches en élastomère et des plaques intermédiaires alternées selon au moins deux couches en élastomère (15) et une plaque intermédiaire (11),
(ii) le segment central (24) comprend des couches en élastomère et des plaques intermédiaires (10) (27) alternées selon au moins trois couches en élastomère (14) et deux plaques intermédiaires (10) (27), où toutes les couches de ce segment sont des couches en élastomère,
(iii) le rapport du diamètre externe de la douille entière, composée de deux demi-coques agencées l'une au dessus de l'autre, dans la direction verticale (a) sur le diamètre externe de la demi-douille ou de la douille entière dans la direction horizontale (b) va de 1,2 à 1,5, de telle sorte que le rayon de la plaque de demi-coque externe (12) et par conséquent de la douille de serrage (8) dans la dimension horizontale est plus petit que celui dans la dimension verticale, et le rapport de l'épaisseur de couche au centre de la demi-douille dans la direction verticale (c) sur l'épaisseur de couche au niveau de la face avant de la demi-douille dans la direction horizontale (d) va de 1,5 à 2.5, de telle sorte que chaque demi-coque et également la coque entière sont excentrées par rapport à l'axe de douille (4), à la fois dans l'état non sous tension et également dans l'état en pré-tension, et
(iv) les nombres de couches en élastomère (15) et de plaques (11) des segments latéraux (23) sont inférieurs aux nombres respectifs de couches en élastomère (14) et de plaques (10) (27) du segment central d'un élément de demi-coque.

2. Douille de serrage selon la revendication 1, **caractérisée en ce que** le segment central (24) comporte quatre couches en élastomère (14) et trois plaques intermédiaires (10) et chaque segment latéral (23) comporte deux ou trois couches en élastomère (15) et une ou deux plaque(s) intermédiaire(s) (11), où une plaque intermédiaire (10) ou (11) peut être remplacée par une plaque intermédiaire continue (16).

3. Douille de serrage excentrée présentant une géométrie excentrée même dans l'état sous tension, comprenant un élément de demi-coque supérieur (7) et un élément de demi-coque inférieur (6), lesquels éléments, en superposition l'un sur l'autre, forment une coque entière qui présente, en coupe longitudinale, un contour ovale, ellipsoïdal ou arqué-rectangulaire dont l'axe long est aligné perpendiculairement à la surface des deux éléments de demi-coque (6) (7) en superposition l'un sur l'autre, où chacun de ces éléments de demi-coque est composé par une plaque de demi-coque externe (12) présentant ledit contour en coupe longitudinale et par une plaque de demi-coque interne (9), où cette dernière présente en coupe longitudinale un contour semi-circulaire et, en association avec la plaque de demi-coque identique interne de l'autre élément de demi-coque lorsqu'ils sont en superposition l'un sur l'autre, forme une cavité cylindrique qui loge l'axe de douille de serrage (4) et entoure fermement ce dernier après que les éléments de demi-coque ont été joints ensemble afin de former la douille de serrage complète (8) et après leur mise sous tension,
**caractérisée en ce que** la plaque de demi-coque externe (12) et la plaque de demi-coque interne (9) de chaque élément de demi-coque (6) (7) sont fermement connectées l'une à l'autre par deux segments latéraux (23) et par un segment central (24), lesquels segments sont conformés de manière analogue à l'élément de demi-coque et remplissent l'espace entre les plaques de demi-coque (9) (12), où
(i) les segments latéraux (23) comprennent des couches en élastomère et des plaques intermédiaires alternées selon au moins deux couches en élastomère (15) et une plaque intermédiaire (11),
(ii) le segment central (24) comprend des couches en élastomère (14) ou des couches vides (28) et des plaques intermédiaires (10) (27) alternées selon au moins trois couches en élastomère ou trois couches vides et deux plaques intermédiaires, où au moins une couche de ce segment est une couche vide,
(iii) le rapport du diamètre externe de la douille entière, composée de deux demi-coques agencées l'une au dessus de l'autre, dans la direction verticale (a) sur le diamètre externe de la demi-douille ou de la douille entière dans la direction horizontale (b) va de 1,2 à 1,5, de telle sorte que le rayon de la plaque de demi-coque externe (12) et par conséquent de la douille de serrage (8) dans la dimension horizontale est plus petit que celui dans la dimension verticale, et le rapport de l'épaisseur de couche au centre de la demi-douille dans la direction verticale (c) sur l'épaisseur de couche au niveau de la face avant de la demi-douille dans la direction horizontale (d) va de 1,5 à 2.5, de telle sorte que chaque demi-coque et également la coque entière sont excentrées par rapport à l'axe de douille (4), à la fois dans l'état non sous tension et également dans l'état en pré-tension, et
(iv) les nombres de couches en élastomère (15) et de plaques (11) des segments latéraux (23) sont inférieurs ou égaux aux nombres de couches en élastomère (14) ou de couches vides (28) et de plaques (10) (27) du segment central d'un élément de demi-coque.

4. Douille de serrage selon la revendication 3, **caractérisée en ce que** le segment central (24) comporte des couches en élastomère (14) et des couches vides (28) en alternance.

5. Douille de serrage selon la revendication 3, **caractérisée en ce que** toutes les couches du segment central (24) sont des couches vides (20).

6. Douille de serrage selon la revendication 5, **caractérisée en ce que** le segment central (24) comporte quatre couches vides (28) et chaque segment latéral (23) comporte quatre couches en élastomère (15), où les couches (28) (15) dans les différents segments présentent la même épaisseur et sont séparées les unes des autres par trois plaques intermédiaires (27) courant sur toute la longueur des segments.

7. Douille de serrage selon l'une des revendications 1 - 6, **caractérisée en ce qu'**elle est alignée verticalement dans l'état installé, et ainsi, les segments centraux des demi-coques sont alignés verticalement et les segments latéraux des demi-coques sont alignés horizontalement.

8. Douille de serrage selon l'une des revendications 1 - 7, **caractérisée en ce que** les segments (23) et (24) sont séparés les uns des autres dans la région des couches en élastomère par des fenêtres de jonction de séparation (25).

9. Douille de serrage selon l'une des revendications 1 - 8, **caractérisée en ce que** les couches en élastomère présentent une dureté Shore plus importante dans les segments latéraux (23) que dans le segment central (24).

10. Douille de serrage selon l'une des revendications 1 - 9, **caractérisée en ce que** les extrémités latérales de chaque élément de demi-coque (6) (7) comportent une couche de séparation élastomérique (13), laquelle est présente sur tout l'espace entre la plaque de demi-coque externe (12) et la plaque de demi-coque interne (9).

11. Douille de serrage selon l'une des revendications 1 - 10, **caractérisée en ce que** les couches en élastomère (15) des segments latéraux (23) sont incurvées d'une manière concave au niveau de leurs extrémités faisant face au plan de séparation des deux demi-coques.

12. Douille de serrage selon l'une des revendications 1 - 11, **caractérisée en ce qu'**un élément de demi-coque (6) (7) comporte au moins une plaque intermédiaire continue (16) qui connecte tous les segments.

13. Sabot de serrage comprenant une moitié de serrage inférieure (1) et une moitié de serrage supérieure (2), lequel entoure une douille de serrage (8) selon les revendications 1 - 12 et l'axe de douille (4), lequel est passé centralement au travers de cette dernière et est connecté au support de couple (5), où les moitiés de serrage sont mises sous tension l'une contre l'autre au moyen d'un moyen de mise sous tension et mettent ainsi en pré-tension la douille de serrage, de telle sorte que les vibrations des pièces de machine montées sur le support de couple (5), lesquelles vibrations se produisent de manière prédominante dans la direction longitudinale de la douille de serrage, soient amorties.

14. Support de couple comprenant une douille de serrage ou un sabot de serrage selon l'une des revendications 1 - 13.

15. Utilisation d'une douille de serrage, d'un sabot de serrage ou d'un support de couple selon les revendications 1 à 14 pour amortir et/ou découpler en terme de son des vibrations dans des éoliennes qui se produisent de manière prédominante verticalement ou dans la direction longitudinale de la douille de serrage.
